# EUROPEAN PATENT APPLICATION

(11) **EP 4 793 801 A1**
(43) Date of publication of application: **19.08.2026**
(21) Application number: 26158759.6
(22) Date of filing: 16.02.2026
(51) Int. Cl.: G06F 21/10

(54) **INFORMATION PROCESSING APPARATUS AND CONTROL METHOD THEREOF**

(30) Priority: 17.02.2025 JP 2025023702
(71) Applicant: Canon Kabushiki Kaisha, Tokyo 146-8501 (JP)
(72) Inventor: KURIHARA, Daisuke, Ohta-ku, Tokyo, 146-8501 (JP); NOGAMI, Atsushi, Ohta-ku, Tokyo, 146-8501 (JP)
(74) Representative: TBK

(57) **Abstract**

An information processing apparatus (301) comprises: obtainment means (302) for obtaining content generated by generative artificial intelligence, Al,; identification means (303) for identifying an object having an infringement risk among objects included in the content; and recording means (308) for recording, as risk information, position information of the object in the content.

## Description

### TECHNICAL FIELD

The present disclosure relates to a technique for supporting evaluation of a risk of infringement of rights for content.

### BACKGROUND

With the spread of a trained model (generative Al) learned for the purpose of data generation, an environment in which a large amount of a wide variety of content (text, image, moving image, audio, 3D model, and the like) can be generated is being developed. On the other hand, content (Al content) generated by the generative Al may include content that has a risk of infringement on rights of a third party (trademark right, copyright, portrait right, and the like). In particular, some of the generative Al arbitrarily generate a detailed portion not included in the content (prompt) designated by a user. Therefore, in using Al content, it is necessary to correctly grasp a risk of infringement of rights by the Al content.

Japanese Patent No. 7448271 (Patent Document 1) discloses a technique of obtaining relevant information (such as licensing terms for copyright and licensing terms for portrait right) of an image group used for learning of image generation AI, and giving the relevant information as metadata to Al content generated by a model. The Agency for Cultural Affairs, Government of Japan, "Checklist & Guidance on Al and Copyright" (p. 26), July 2024 (Non Patent Document 1) proposes utilization of Internet search (text search and image search) as a method of confirming whether or not Al content is similar to existing work.

### SUMMARY

However, the method of Patent Document 1 cannot give the Al content appropriate metadata in a case where the relevant information relevant to the image group used for learning of the generative Al cannot be obtained. As a result, the risk of infringement of rights by the Al content cannot be evaluated.

The method of Non Patent Document 1 has a possibility of overlooking an object with a high risk of infringement in a case where Al content includes a large number of objects. In particular, in a case where an image that is Al content includes a large number of objects, oversight of evaluation of the risk of infringement for an object with a relatively small size is likely to occur.

The present disclosure provides a technique for supporting evaluation of a risk of infringement of rights for content.

The present disclosure in its first aspect provides an information processing apparatus as specified in claim 1. Optional features are specified in claim 2 to 9.

The present disclosure in its second aspect provides a control method as specified in claim 10

The present disclosure in its third aspect provides a computer program as specified in claim 11.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a view illustrating a hardware configuration of an information processing apparatus.
FIG. 2 is a view describing a usage scene of the information processing apparatus.
FIG. 3 is a view illustrating a functional configuration of the information processing apparatus.
FIG. 4 is a flowchart for calculating and recording a risk value.
FIG. 5 is a view showing a table for managing category names and selection objects.
FIG. 6 is a view showing a table for managing risk values of objects (Modification Example 1-3).
FIG. 7 is a view describing a usage scene of an information processing apparatus (second embodiment).
FIG. 8 is a view illustrating a functional configuration of the information processing apparatus (second embodiment).
FIG. 9 is a flowchart for calculating and recording a risk value (second embodiment).
FIG. 10 is a view describing a usage scene of an information processing apparatus (third embodiment).
FIG. 11 is a view illustrating a functional configuration of the information processing apparatus (third embodiment).
FIG. 12 is a flowchart for evaluating a trained model.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

As a first embodiment of an information processing apparatus according to the present disclosure, an information processing apparatus that evaluates a risk of infringement for an image generated using image generation Al will be described below as an example.

### Outline

In the present embodiment, in evaluating the risk of infringement for the image generated using the image generation AI, an image region with a high risk of infringement in the image is presented to the user. Specifically, objects included in the image are extracted, the risk value of the risk of infringement is calculated for each object, and the position information in the image and the risk value are recorded as metadata of the image. The risk value is not essential as metadata. For example, the information may pertain to presence or absence of a risk. When the image is displayed, the content of the metadata is also displayed. For example, the region recorded in the metadata is superimposed on the image.

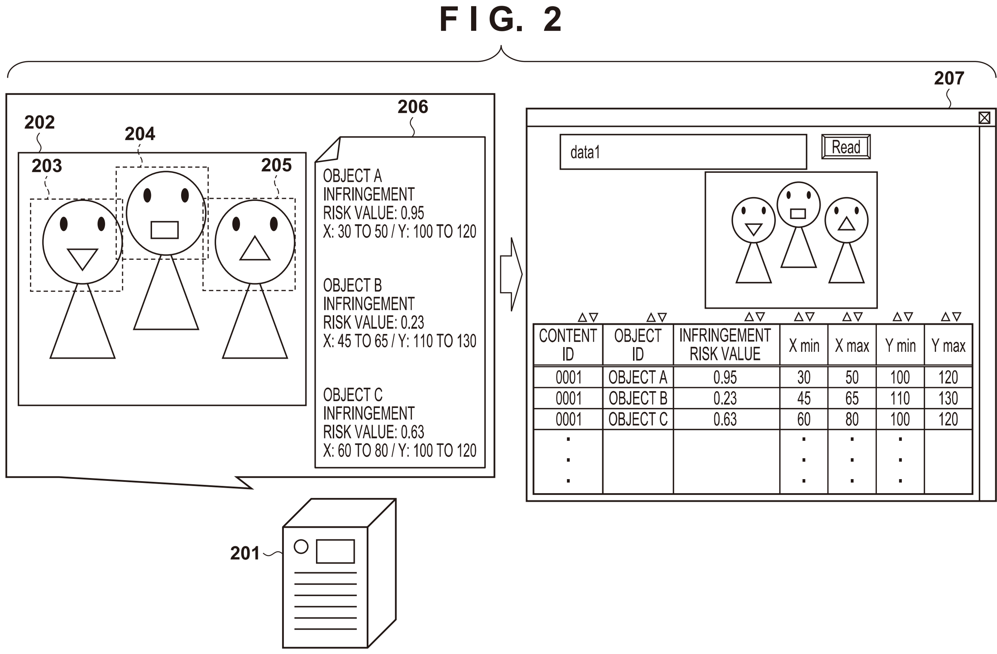

FIG. 2 is a view describing a usage scene of the information processing apparatus. The calculation of the position information and the risk value and the recording into the metadata are performed by an information processing apparatus 201. In FIG. 2, the position information and the risk value are calculated for objects 203 to 205 included in an image 202. The calculated position information and risk value are recorded as metadata 206 in the image.

The user can confirm the content recorded in the metadata 206 at an arbitrary timing on a display screen 207 displayed via a display unit 107. For example, the user can confirm it when considering commercial use of the image 202. By confirming the content recorded in the metadata 206, the user can easily identify the position of an object having an infringement risk and confirm the level of the infringement risk. These can reduce the burden related to the confirmation of the risk of infringement of the image 202 of the user.

### Terms

The image generation Al is an image processing model that artificially generates a new image based on specific input data (also called a prompt) such as text and an image, for example.

The object with a risk of infringement is, for example, an object included in an image, such as a character such as a person or an animal, a building, a symbol, or a logo. The occupancy rate (area ratio, coverage ratio) and the quantity of these objects in the image are not particularly limited. That is, the object may be drawn in a small region that is a very small part of the image, or may occupy a large part of the image. Only one object or a plurality of objects may be included in the image.

The position information indicates a region in which the object is drawn in the image. The shape of the region is not particularly limited as long as it includes a drawing range of the object. For example, the shape may be a rectangular shape or a shape along the contour of the object.

The risk value is an arbitrary index indicating the degree of possibility that the object is an object that infringes on rights (trademark right, copyright, portrait right, and the like) of copyright-protected existing work or the like.

The metadata is supplementary information regarding the image, and in the present embodiment, is the above-described position information and risk value. The metadata can be embedded, for example, as an exchangeable image file, Exif, format header of an image file. Note that a specific recording method of the metadata is not particularly limited as long as the user can confirm the recorded content at an arbitrary timing.

### Apparatus Configuration

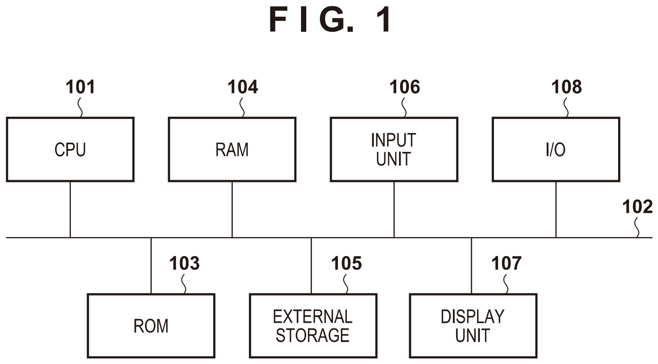

FIG. 1 is a view illustrating a hardware configuration of the information processing apparatus. A CPU 101 performs control of various devices connected to a bus 102 and execution of information processing of the present disclosure. CPU is an abbreviation for central processing unit. A ROM 103 stores a basic input/output, BIOS, program and a boot program. ROM is an abbreviation for read only memory. A RAM 104 is used as a main storage apparatus of the CPU 101. RAM is an abbreviation for random access memory.

An external storage 105 is a storage such as an HDD or an SSD that stores a program to be processed by the information processing apparatus 201. HDD is an abbreviation for hard disk drive, and SSD is an abbreviation for solid state drive.

An input unit 106 is a keyboard or a mouse, and is hardware that receives input of a user operation. The display unit 107 is hardware that outputs a calculation result of the information processing apparatus 201 to a display apparatus in accordance with an instruction from the CPU 101. Note that the display apparatus may be of any type, such as a liquid crystal display apparatus, a projector, or an LED indicator. LED is an abbreviation for light emitting diode. An I/O 108 is an interface for communication connection with a management server (not illustrated) storing a given rights-protected data group. I/O is an abbreviation for input/output. Note that the communication connection may be wired or wireless. The bus 102 is a bus that connects the above-described units in a mutually communicable aspect.

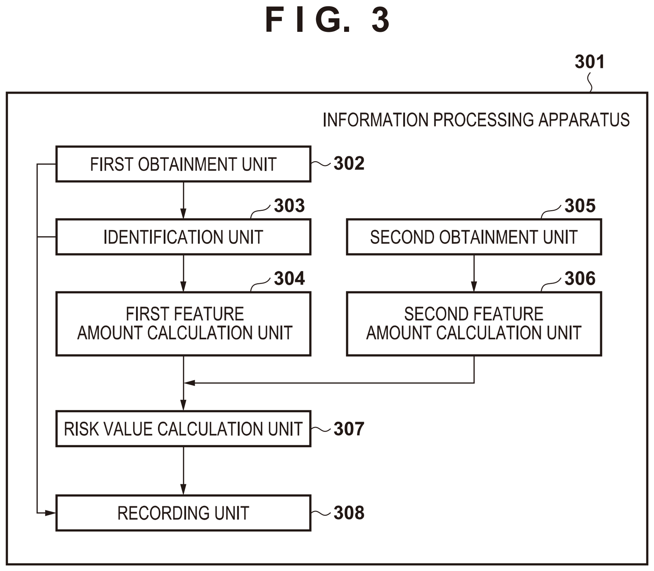

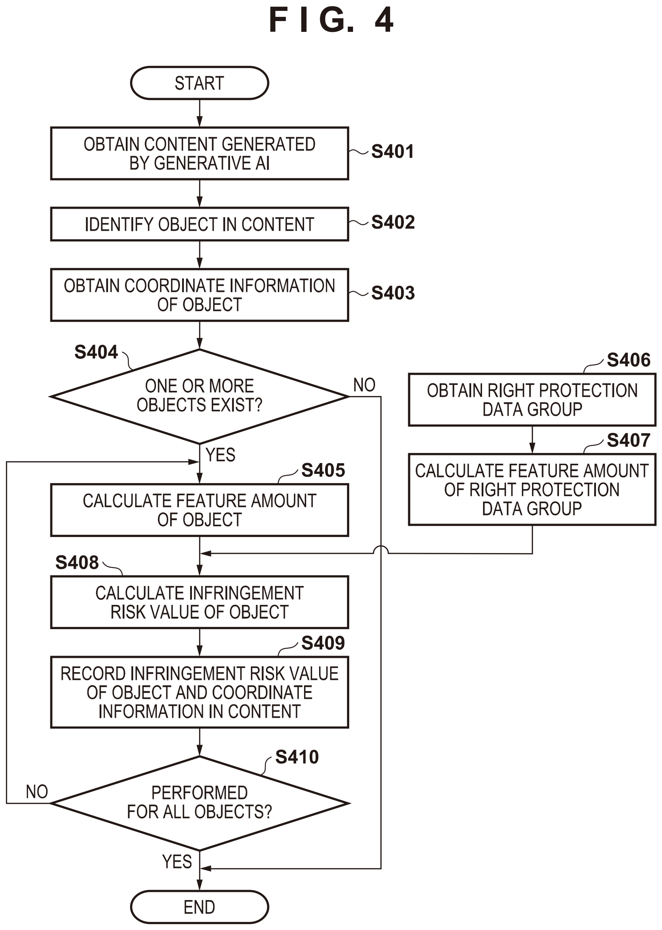

FIG. 3 is a view illustrating a functional configuration of the information processing apparatus. Note that details of the processing operation of each functional unit will be described later with reference to FIG. 4. An information processing apparatus 301 includes a first obtainment unit 302, an identification unit 303, a first feature calculation unit 304, a second obtainment unit 305, a second feature calculation unit 306, a risk value calculation unit 307, and a recording unit 308.

Note that each functional unit included in the information processing apparatus 301 is assumed to be implemented by software (implemented by the CPU 101 executing a program), some or all of them may be implemented by hardware such as an application specific integrated circuit, ASIC,. Furthermore, it may be implemented by one information processing apparatus, or may be implemented by cooperation of a plurality of information processing apparatuses.

The first obtainment unit 302 obtains content (content such as text, image, and audio) generated by generative AI. In the present embodiment, the image 202 generated using image generation Al is obtained.

The identification unit 303 identifies one or more objects (objects with risk of infringement) included in the content obtained by the first obtainment unit 302. In the present embodiment, the objects 203 to 205, which are objects included in the image 202, are identified, and position information (coordinates) in the image of each of the objects is calculated.

The first feature calculation unit 304 calculates the feature representation of the object identified by the identification unit 303. In the present embodiment, the feature representation of each of the objects 203 to 205 is calculated.

The second obtainment unit 305 obtains, from a management server (not illustrated) storing right protection data, data (image) that is a basis of data (feature representation) to be used for comparison by the risk value calculation unit 307 described later. In the present embodiment, the rights-protected data is an image group known to be protected by copyright, trademark rights, portrait rights, or the like.

The second feature calculation unit 306 calculates the feature representation of the rights-protected data obtained by the second obtainment unit 305. In the present embodiment, the second feature calculation unit 306 calculates feature representation of the right protection image group obtained by the second obtainment unit 305. Note that the second feature calculation unit 306 calculates the feature representation by an identical method to that of the first feature calculation unit 304. Note that the second feature calculation unit 306 and the first feature calculation unit 304 may be configured as a single common functional unit.

The risk value calculation unit 307 calculates the risk value by comparing the feature representations obtained by the first feature calculation unit 304 and the second feature calculation unit 306. In the present embodiment, the risk value calculation unit 307 calculates the risk value by comparing the feature representation of each of the objects 203 to 205 calculated by the first feature calculation unit 304 with the feature representation of each right protection image calculated by the second feature calculation unit 306. Details of the calculation method of the risk value will be described later.

The recording unit 308 records, as risk information, the content obtained by the first obtainment unit 302, the position information of the object obtained by the identification unit 303, and the risk value calculated by the risk value calculation unit 307 in association with one another. In the present embodiment, the recording unit 308 records risk information (the position information and the risk value of each of the objects 203 to 205) in a metadata part of the image 202 obtained by the first obtainment unit 302.

### Apparatus Operation

FIG. 4 is a flowchart for calculating and recording the risk value for the content. Here, the content is assumed to be an image generated by the generative Al based on an instruction (prompt or the like) from the user, and the following processing is started at a timing when obtainment of the image is instructed. However, the processing of S406 and S407 may be performed prior to the obtainment of the image in S401.

In S401, the first obtainment unit 302 obtains the image generated by the generative AI. In the present embodiment, the image 202 generated using image generation Al is obtained. The data to be obtained here is not particularly limited as long as it is content generated using the generative AI, and examples thereof include a moving image, audio, text, and a 3D model. A plurality of pieces of data may be obtained.

In S402, the identification unit 303 identifies (detects) the object included in the generated data obtained in S401. For example, the identification unit 303 identifies the objects 203 to 205 included in the image 202. Note that the processing can be simplified by identifying (detecting) only an object of a specific category (type) that needs to be checked for infringement.

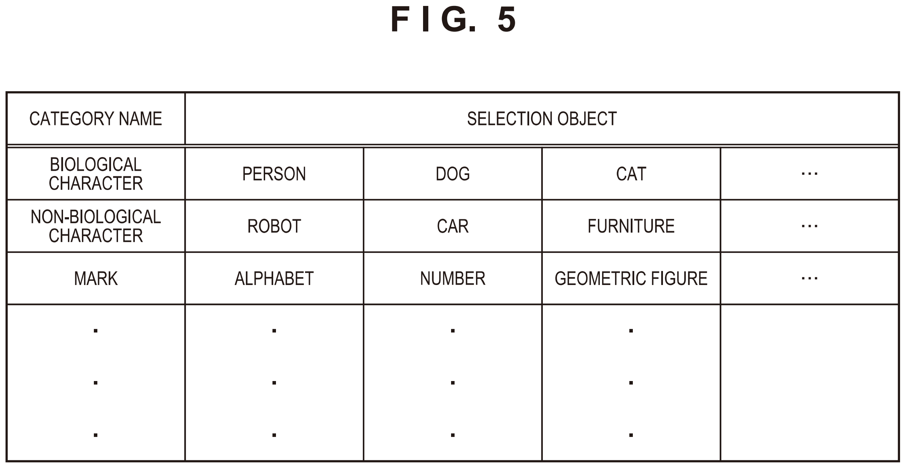

FIG. 5 is a view showing a table for managing category names and selection objects. This table records a category name indicating the category of an object and the type of the object to be selected. The user can select one or more categories from an object management table and narrow down the object to be identified in the generation data.

A specific identification method of the object is not particularly limited as long as it is a method that can extract a feature region of the object. For example, by calculating the feature representation in an arbitrary range in the image and comparing it with a general feature representation of each object recorded in the object management table, it is possible to determine whether the range corresponds to the object. The comparison of the feature representations can be performed, for example, by inputting feature representation data in an arbitrary range in the image to a classification model learned in advance.

Specific examples of classification model include a model using a neural network, a model using a decision tree such as random forest or gradient boosting, and a model using a k-nearest neighbors algorithm. Note that the comparison result of the feature representations may be output numerically to determine whether to set it as a feature region of the object with an arbitrary threshold determined by the user as a determination criterion.

Examples of feature representation of the image for extracting the feature region of the object include global feature representations such as a color histogram and a color distribution. Examples thereof include feature representations by scale-invariant feature transform, SIFT, and speed-up robust features, SURF, and feature representations generated by the neural network. Examples of methods of extracting a feature region of an object based on the feature representation of an image include a bounding box, BB,, instance segmentation, and semantic segmentation. Note that the user may manually set the feature region.

The present embodiment assumes that the feature representation is generated and compared by the neural network, and the feature region of the object is extracted by the BB.

In S403, the identification unit 303 obtains the position information of the feature region of the object obtained in S402. The position information of the feature region of the object is information for specifying the location and range of the feature region in the image of the object. In the present embodiment, the identification unit 303 obtains vertex coordinates in the image of a rectangular feature region corresponding to the object.

In S404, the risk value calculation unit 307 determines whether or not one or more objects are identified in S402. The process proceeds to S405 in a case where one or more objects are identified, and the entire process of FIG. 4 ends in a case where no object is identified.

In S405, the first feature calculation unit 304 calculates the feature representation of the region of each object. Examples of calculation method of the feature representation include a calculation method using a neural network, for example, and a calculation method using principal component analysis. The present embodiment assumes that feature calculation using convolutional neural networks is performed.

In S406, the second obtainment unit 305 connects to the management server storing the rights-protected data group and obtains the rights-protected data group. The management server storing the rights-protected data is not particularly limited as long as it can store the rights-protected data group, and may be the external storage 105 or a network server such as a cloud that communicates via a network using the I/O 108.

In S407, the second feature calculation unit 306 calculates the feature representations of the rights-protected data group obtained in S406. The calculation method of the feature representations is not particularly limited as long as it can compare the feature representations with the feature representation of the object calculated in S405. The present embodiment assumes use of a method similar to the calculation method of the feature representation used in S405.

Note that the rights-protected data group to be stored may be converted into a feature representation in advance, and the obtainment unit 305 may obtain the data converted into the feature representation. In a case where there are a plurality of pieces of data with close feature representations among the rights-protected data, only a part thereof may be obtained.

In S408, the risk value calculation unit 307 compares the feature representation of the object obtained in S405 with the feature representation of each of the rights-protected data group obtained in S407 to calculate the risk value of the object. Various methods can be used as a method of comparing the feature representation of the object with the feature representation of the rights-protected data. Examples thereof include Euclidean distance and cosine similarity. The expression method of the risk value is not particularly limited as long as it is an expression method that can compare the magnitude of the risk. For example, it may be a numerical value or may be indicated by a category such as high, medium, or low. The present embodiment assumes that a maximum value of cosine similarity compared with each feature representation of the rights-protected data group as a risk value of the object is used in the metadata 206. It is assumed that the risk value of the object takes a real number value in the range of 0 to 1, and the closer to 1, the higher the risk of infringement.

In S409, the recording unit 308 records, in the external storage 105 for each object, the position information of the feature region of the object obtained in S403 and the risk value calculated in S408. It is also possible to compare the risk value with a threshold to record risk values exceeding the threshold as indicating that there is a risk and others as indicating that there is no risk. The user can know the presence or absence of the risk of the object.

In S410, the risk value calculation unit 307 confirms whether or not the risk values have been calculated for all the objects identified in S402. In a case where there remains an object for which the risk value has not been calculated, the processing of S405 and S408 to S409 is performed on the unprocessed object to calculate and record the risk value. In a case where the risk values have been calculated and recorded for all the objects, the entire process of FIG. 4 ends.

As described above, according to the first embodiment, one or more objects included in an image are identified, and position information and a risk value (or presence or absence of a risk) of each object are calculated and recorded as metadata. Then, when the user evaluates the risk of infringement of the image (such as content by the image generation AI), the evaluation target image is displayed, and an image region with a high risk of infringement in the image is displayed. This makes it possible to reduce the possibility of overlooking an object with a high risk of infringement even in a case where the evaluation target image includes a large number of objects or small objects. Even if the risk value and the presence or absence of the risk are not explicitly indicated, the image region displayed so as to be distinguishable from other regions as a result of the infringement check has a risk of infringement.

By recording, in the metadata, the position information and the risk value (presence or absence of risk) in association with each other regarding the object with a high risk of infringement, the user can easily confirm the information related to the risk of infringement at an arbitrary timing.

### (Modification Example 1-1)

As a method for specifying the category of the object included in content that is an identification condition for identifying the object, the above description adopts a configuration in which the user selects the category of the object from the table (FIG. 5). On the other hand, the present disclosure is not limited to this as long as the category of the object can be determined. For example, the category of the object may be determined from user input information (prompt) when the content is generated from the generative AI. Scene analysis or the like of the content may be performed, and the category of the object may be determined. This can save time and effort for the user to determine the category of the object according to the content.

### (Modification Example 1-2)

In the above description, the risk value is calculated from the maximum value when the cosine similarity between the feature representation of the object and each feature representation of the rights-protected data group is calculated. However, as long as the value indicates the magnitude of the risk of infringement, the value may be calculated by another derivation method. For example, the risk value may be a value in which the value resulting from the comparison between the feature representation of the object with each feature representation of the rights-protected data group is weighted with information related to each rights-protected data or information related to the object. Examples of information related to the rights-protected data include "remaining term of protection" and the "presence or absence of license" of the rights-protected data. Examples of information related to the object include "occupancy rate" and "center coordinates" of the object in the content. This enables the user to obtain the evaluation result of the risk of infringement using the composite information.

### (Modification Example 1-3)

In the above description, the position information of the feature region of the object and the risk value are recorded in the metadata part (Exif or the like) of the object. On the other hand, as long as the content, the position information of the feature region of the object, and the risk value of the object can be recorded in association with one another, they may be recorded in another form. For example, a channel indicating the distribution of risk values may be additionally recorded with respect to content channels (e.g., RGB color channels). It may be configured not to be recorded integrally with the content but to be managed as a separate database (table).

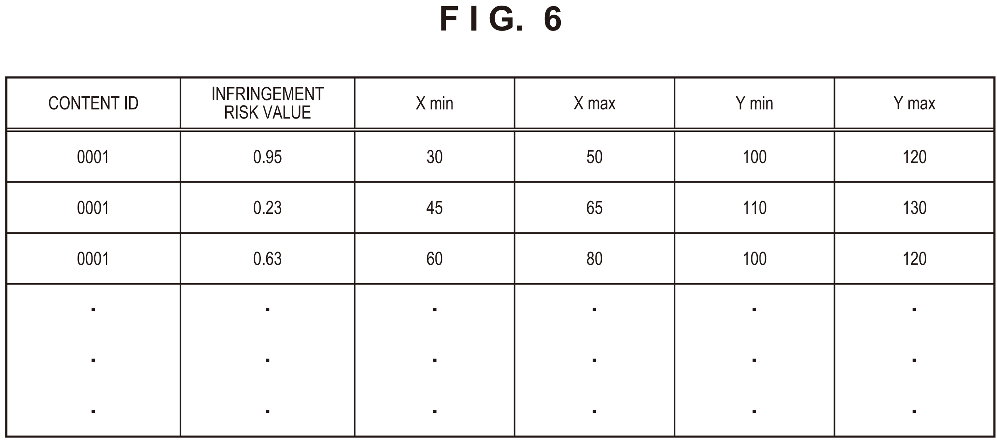

FIG. 6 is a view showing a table for managing risk values of objects. For example, as in the management table illustrated in FIG. 6, content identification (ID) information, position information (maximum value and minimum value of X-Y coordinates) of a feature region of an object, and a risk value of the object may be recorded in association with one another. Note that the items to be recorded in the management table are not limited to these items. A storage location (storage unit) of data in which information such as a management table is recorded is not particularly limited as long as the user can confirm it at an arbitrary timing. That is, it may be the external storage 105 or a network server such as a cloud that is communicable via the I/O 108.

### (Modification Example 1-4)

In the above description, the risk of infringement is evaluated in a case where the content is an image. On the other hand, the type of data of the content is not particularly limited as long as a specific region in the content can be expressed as position information. For example, it may be a moving image, audio, text, or the like. A specific example of the position information of the object in a case of obtaining a moving image, audio, or text will be described.

In a case where the content is a moving image, the position information of the object includes, for example, position information specifying a location and range in a specific frame image of the moving image. In a case of audio, the position information of the object includes, for example, time information based on the elapsed time from the start time in the audio. By designating the start time and the end time of the target range, the location and range of the object can be designated. In a case of text, the position information of the object includes, for example, information based on the number obtained by counting the number of words from the document start in the text data. By designating the start word position and the end word position of the target range, the location and range of the object can be designated. Note that another position expression method may be used as long as the position of the object in the content can be specified.

### Second Embodiment

In the second embodiment, a form will be described in which additional information regarding protection of rights is presented when the user evaluates the risk of infringement of an image.

### Outline

In the present embodiment, in addition to the screen display (FIG. 2) in the first embodiment, a form of presenting related rights-protected data and supplementary information in relation to an object whose risk value of infringement exceeds an arbitrary threshold, and a substitute image are presented. Here, the related rights-protected data is data determined to have a high possibility that the object is infringing among the rights-protected data managed by the management server or the like. The supplementary information is information related to the right related to the rights-protected data, and specifically includes information on the right holder, a publication date of the rights-protected data, and presence or absence of license. As described in detail later, the substitute image to be presented is an image that can be substituted for the object and has a low risk of infringement.

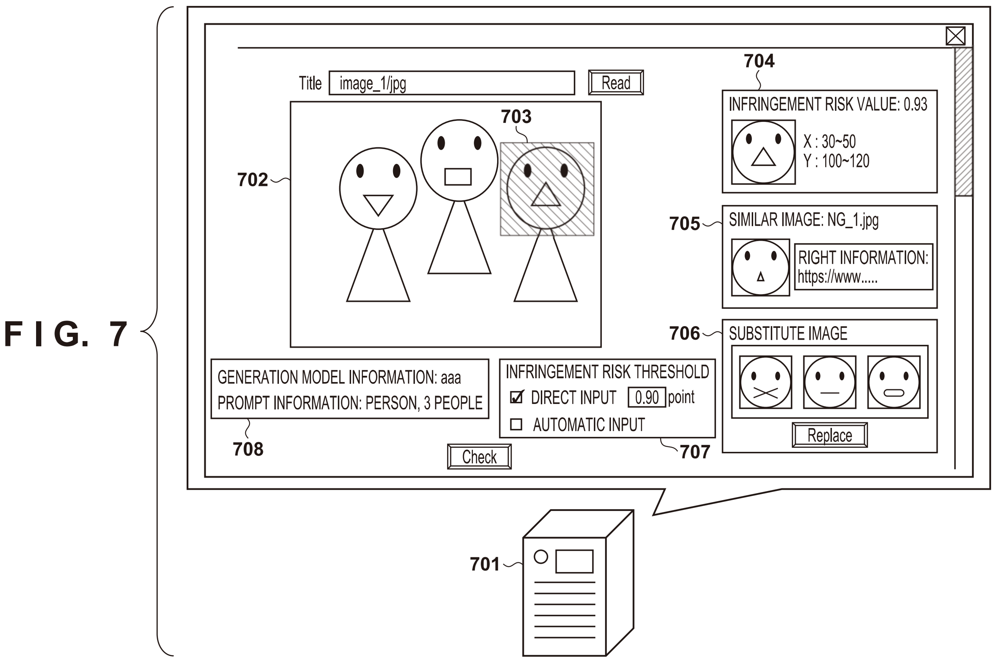

FIG. 7 is a view describing a usage scene of the information processing apparatus in the second embodiment. FIG. 7 is a view illustrating a screen for which an information processing apparatus 701 calculates position information and a risk value for an object included in an image that is content, and presents an object exceeding a threshold of the risk value set by the user.

Specifically, the information processing apparatus 701 displays an evaluation target image (image in which the faces of the three persons are drawn) in a display region 702. Highlight display 703 is superimposed on the object exceeding the threshold designated by a threshold setting user interface, UI, 707. An image of the rights-protected data similar to the object displayed in a display region 704, and supplementary information are displayed in a display region 705. Substitute images (images with a low risk of infringement) of the object displayed in the display region 704 are displayed in a substitute image UI 706.

By confirming the display region 702, the user can recognize the position of the object with a high risk of infringement in the image. By confirming the display region 704, the user can confirm detailed information on the object with a high risk of infringement. Furthermore, by confirming the display region 705, the user can confirm corresponding rights-protected data and supplementary information of the rights-protected data.

Furthermore, the substitute image UI 706 presents one or more substitute images that are proposed as substitutes for the object with a high risk of infringement. By selecting one substitute image to replace the object from these substitute images, the user can execute replacement of the object with the substitute image.

In the threshold setting UI 707, the user can arbitrarily set the threshold of the risk value, and the user can arbitrarily determine the notification sensitivity of the risk of infringement according to the situation. A display region 708 presents generation conditions (e.g., information on a generation model, a prompt set at the time of generation, and the like) used when generating the evaluation target image displayed in the display region 702.

This enables the user to easily confirm the object with the risk of infringement and the rights-protected data and supplementary information similar to the object in the evaluation target image. It becomes possible to easily generate an image in which the object with the risk of infringement is replaced with a substitute image.

### Apparatus Configuration

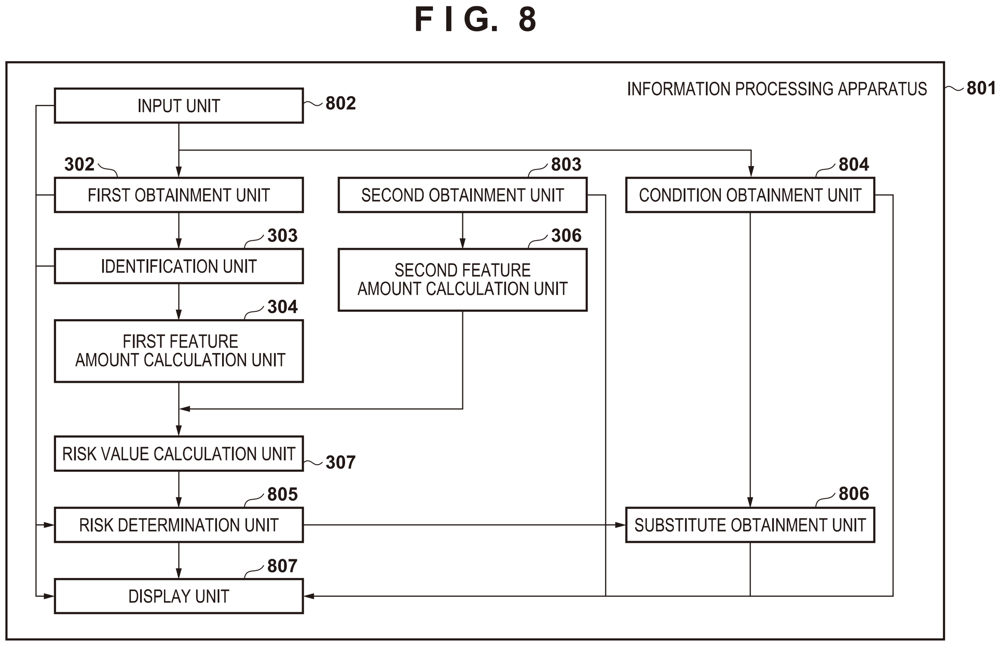

FIG. 8 is a view illustrating a functional configuration of the information processing apparatus in the second embodiment. Note that the hardware configuration is similar to that of the first embodiment (FIG. 1), and thus description will be omitted.

An information processing apparatus 801 includes the first obtainment unit 302, the identification unit 303, the first feature calculation unit 304, the second feature calculation unit 306, and the risk value calculation unit 307, which are described in the first embodiment (FIG. 3). The information processing apparatus 801 further includes an input unit 802, a second obtainment unit 803, a condition obtainment unit 804, a risk determination unit 805, a substitute obtainment unit 806, and a display unit 807.

The input unit 802 performs selection of content to be obtained by the first obtainment unit 302, and obtainment of a threshold or the like to be used by the risk determination unit 805. In the present embodiment, the input unit 802 selects an image to be displayed in the display region 702 and obtains the threshold input by the user in the threshold setting UI 707.

The second obtainment unit 803 obtains data serving as comparison information and supplementary information from the management server storing the rights-protected data. In the present embodiment, the obtained data is displayed in the display region 705 in a case where the risk determination unit 805 determines that the risk value exceeds the threshold.

The condition obtainment unit 804 obtains the generation condition used when generating the content obtained by the first obtainment unit 302. In the present embodiment, the obtained generation condition is displayed in the display region 708.

The risk determination unit 805 determines the risk of infringement by comparing the risk value calculated by the risk value calculation unit 307 with the threshold obtained by the input unit 802. In the present embodiment, the risk determination unit 805 makes a determination by comparing the threshold input by the threshold setting UI 707 with the risk value calculated by the risk value calculation unit 307.

The substitute obtainment unit 806 obtains an image serving as a substitute for the object determined to have a high risk of infringement by the risk determination unit 805. For example, an image may be obtained from the external storage 105, or an image may be obtained from a network server such as a cloud that is communicable via the I/O 108. In the present embodiment, the obtained substitute image is displayed in the substitute image UI 706. Note that by operating the substitute image UI 706, the user can arbitrarily determine which image to use as a substitute for the object.

The display unit 807 generates and displays the screen illustrated in FIG. 7. That is, the display unit 807 controls the display of information obtained by the first obtainment unit 302, the identification unit 303, the second obtainment unit 803, the condition obtainment unit 804, and the substitute obtainment unit 806, as well as the determination result determined by the risk determination unit 805.

### Apparatus Operation

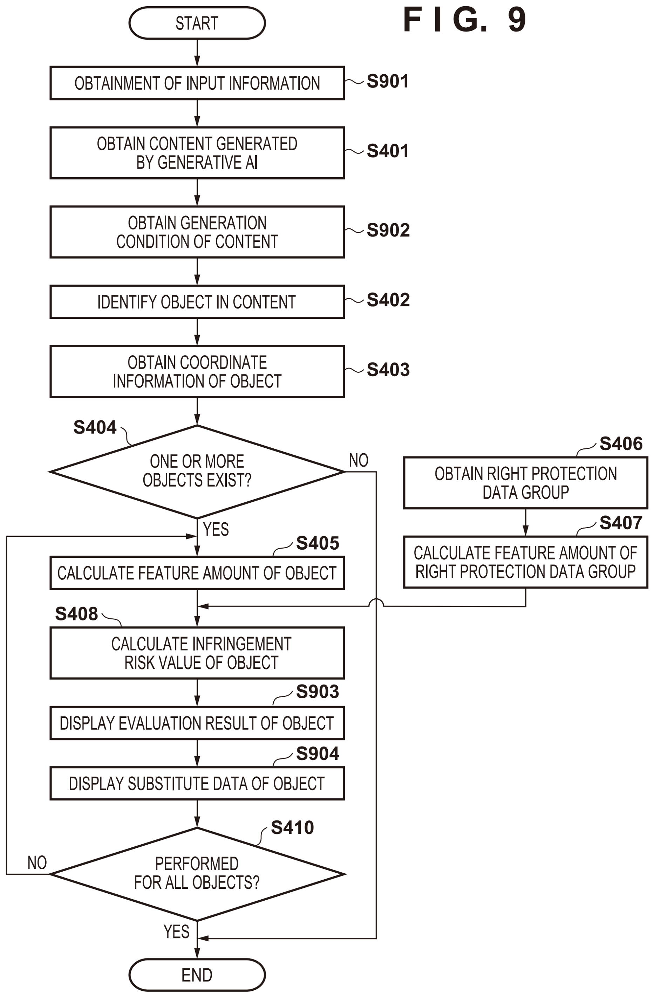

FIG. 9 is a flowchart for calculating and recording the risk value for the content in the second embodiment. Here, the content is assumed to be an image generated by the generative Al based on an instruction (prompt or the like) from the user, and the following processing is started at a timing when obtainment of the image is instructed. However, the processing of S406 and S407 may be performed prior to the obtainment of the image in S401. Note that S401 to S408 and S410 are similar to those of the first embodiment, and thus description will be omitted.

In S901, the input unit 802 obtains the input content input by the user. In the present embodiment, the input unit 802 obtains the input content (file path of image data of image and threshold value) illustrated in FIG. 7. Note that data regarding determination of the risk of infringement such as a threshold may be included, and other information is not particularly limited.

In S902, the condition obtainment unit 804 obtains the generation condition of the content obtained in S401. The generation condition of the content is a condition set for creating the content obtained in S401. For example, the generation conditions include a model name, a prompt, a negative prompt, a CFG scale, and a seed. The present embodiment assumes obtaining a model name and a prompt, but the generation conditions to be obtained are not limited to these.

In S903, the risk determination unit 805 compares the risk value of the object calculated in S408 with the threshold obtained in S901 to evaluate the risk of infringement of the object and present the result thereof. Note that the evaluation method of the risk of infringement is not limited to a specific method. For example, determination may be made based on the magnitude relationship between the risk value of the object calculated by one model and the threshold. The risk value of the object may be calculated by a plurality of models, and evaluated by the magnitude relationship between the average value or the median value thereof and the threshold. The evaluation may be performed in consideration of supplementary information of the rights-protected data.

Note that the display unit 107 may display one or a plurality of evaluation results. All results may be presented, or filtering may be performed under an arbitrary condition to limit the results to be presented. In the present embodiment (FIG. 7), in a case where the risk value of the object calculated in S408 is larger than the threshold, it is determined that the risk of infringement is high, and the object with a high risk of infringement is displayed using the highlight display 703 and the display region 704.

In S904, the substitute obtainment unit 806 obtains and presents, to the user, substitute data of the object determined to have a high risk of infringement in S903. Note that in a case of receiving an instruction to replace the object determined to have a high risk of infringement with the substitute image (such as pressing "Replace" button of FIG. 7), control is performed so as to generate substitute content in which the object is replaced with the substitute image. The substitute data is not particularly limited as long as it can replace the object determined to have a high risk of infringement in the content obtained in S401. For example, there is a method in which a data group with a low risk of infringement is obtained in advance, recorded in the management server or the like, and extracted at an arbitrary timing. A method of extracting the recorded data group is not particularly limited, and for example, there is a method of extracting data with high similarity with an object determined to have a high risk of infringement.

Alternatively, data to be extracted based on prompt information at the time of generating the content from the generative Al may be selected, or the user may select arbitrary data with reference to tag data or the like of the recorded data group. One substitute data may be obtained, or a plurality of substitute data may be obtained to let the user arbitrarily select the substitute data. In the present embodiment (FIG. 7), a plurality of images with a high similarity to the object determined to have a high risk of infringement are obtained from an image group with a low risk of infringement prepared in advance and are displayed in the display region 706.

As described above, according to the second embodiment, the object with a high risk of infringement included in the evaluation target content (image) and the information on the related rights-protected data are displayed. This can reduce the user burden when confirming details of the rights-protected data.

It becomes easy to replace an object with a high risk of infringement with a similar substitute image with respect to evaluation target content (image), and it becomes possible to easily obtain an image with a low risk of infringement.

### (Modification Example 2-1)

In the above description, the threshold is arbitrarily determined and set by the user inputting it to the threshold setting UI 707. However, the setting method of the threshold is not limited to this. For example, there is a method of determination using a rights-protected data group. For example, there is a method of determining, as a threshold of the risk of infringement, the maximum distance in a feature representation space of the data group recorded as an identical category of the rights-protected data group. Other methods include a method of determining, as a threshold, the minimum distance between data groups recorded as different categories of a rights-protected data group. Here, the category of a rights-protected data group is data having identical right information, and for example, different poses, different drawing styles, and the like of an identical character are classified into an identical category.

This enables the user to save the time and effort of determining the threshold. It is possible to adaptively determine the threshold corresponding to the content of the rights-protected data group to be compared with the object with the risk of infringement.

### (Modification Example 2-2)

In the above description, the substitute image is obtained from an image group with a low risk of infringement prepared in advance. On the other hand, the method is not particularly limited as long as it is a method of obtaining an image with a low risk of infringement that can replace an object with a high risk of infringement. For example, the image may be regenerated based on the generation condition obtained by the condition obtainment unit 804 and, an arbitrary portion with a low risk of infringement may be obtained. A new image may be generated using an object with a high risk of infringement as a generation condition of the generative AI, and an image with a low risk of infringement among the generated images may be obtained.

This enables the user to save time and effort to prepare an image group with a low risk of infringement in advance. It is possible to reduce a recording region in which an image group with a low risk of infringement is recorded.

### Third Embodiment

In the third embodiment, an information processing apparatus that evaluates a trained model that generates an image will be described. In particular, a form of deriving the risk value described in the first embodiment for a plurality of images generated using various trained models, recording the risk value in association with a generation condition, and evaluating individual trained models will be described.

### Outline

In the present embodiment, regarding individual trained models, a position (region) at which the risk value tends to be relatively high in the generated image is displayed. The content of the generation condition in which the risk value tends to be relatively high at the position is presented to the user.

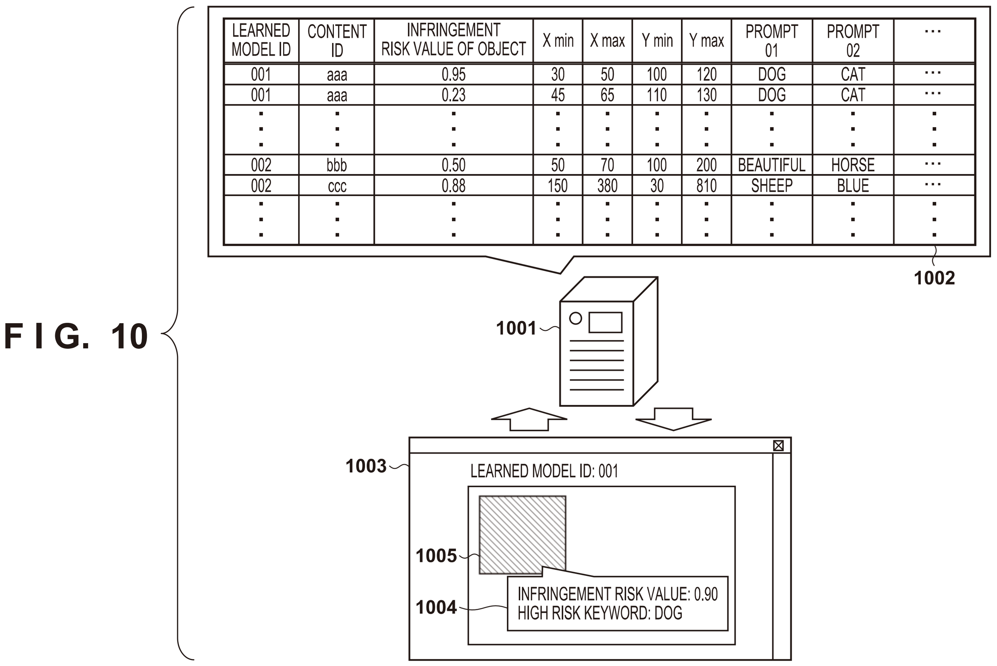

FIG. 10 is a view describing a usage scene of the information processing apparatus in the third embodiment. FIG. 10 is a view illustrating a situation in which an information processing apparatus 1001 records, in a management table 1002, position information on an object with a risk of infringement in content (image) of each trained model, and a risk value and a generation condition associated therewith. The information processing apparatus 1001 displays, on a display screen 1003, the content recorded in the management table 1002 and the content calculated from the recording result. For example, the user can make a confirmation at the time of relearning the trained model, at the time of making improvement specific to the trained model, at the time of considering commercial use, or the like.

A display region 1004 displays the tendency of the risk value corresponding to the position in the image generated by the trained model (here, ID = 001). For example, a region with a particularly high risk of infringement is displayed as a high risk region 1005. The risk value of the region and the generation condition that affects the risk value are displayed together. By confirming these displays, the user can grasp the positional tendency of the content of the individual trained models. It enables the user to improve an appropriate trained model according to the positional tendency, for example.

### Apparatus Configuration

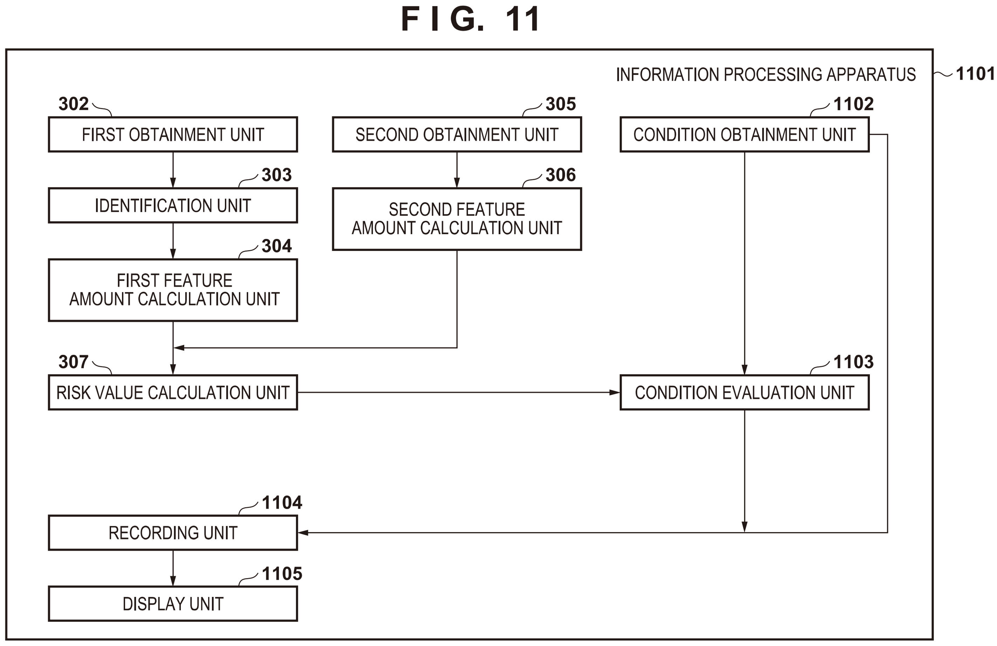

FIG. 11 is a view illustrating a functional configuration of the information processing apparatus in the third embodiment. Note that the hardware configuration is similar to that of the first embodiment (FIG. 1), and thus description will be omitted.

An information processing apparatus 1101 includes the first obtainment unit 302, the identification unit 303, the first feature calculation unit 304, the second obtainment unit 305, the second feature calculation unit 306, and the risk value calculation unit 307, which are described in the first embodiment (FIG. 3). The information processing apparatus 1101 further includes a condition obtainment unit 1102, a condition evaluation unit 1103, a recording unit 1104, and a display unit 1105.

The condition obtainment unit 1102 obtains the generation conditions (model used and prompt) used when generating the content obtained by the first obtainment unit 302. In the present embodiment, the obtained generation condition is recorded in the management table 1002.

The condition evaluation unit 1103 evaluates the risk of infringement associated with the position information using the result of the risk determination unit 805 and the generation condition obtained by the condition obtainment unit 1102. The recording unit 1104 records, in the management table 1002 and the like, the content obtained by the condition obtainment unit 1102 and the condition evaluation unit 1103. As a result, information as in the management table 1002 of FIG. 10 is managed. The display unit 1105 displays the evaluation result of the trained model based on the content of the management table 1002 recorded by the recording unit 1104.

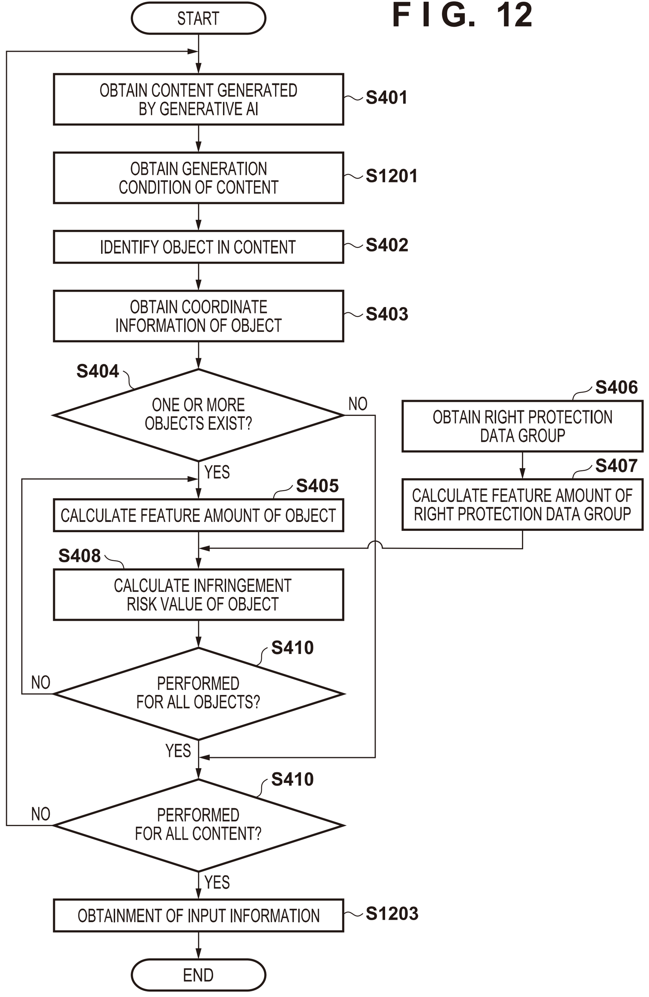

FIG. 12 is a flowchart for evaluating the trained model. Here, the content is assumed to be an image generated by the generative Al based on an instruction (prompt or the like) from the user, and the following processing is started at a timing when obtainment of the image is instructed. However, the processing of S406 and S407 may be performed prior to the obtainment of the image in S401.

In S1201, the condition obtainment unit 1102 obtains the generation condition of the content obtained in S401. In the present embodiment, a trained model ID and a prompt are obtained. The trained model ID is an ID that can specify the model file and the learning data used for learning. Note that the generation conditions to be obtained are not limited to these.

In S1202, the risk value calculation unit 307 confirms whether or not the risk of infringement has been evaluated for all the pieces of content (images) instructed by the user. In a case of there remains content for which the risk of infringement has not been evaluated, the unevaluated content is subjected to the processing in and after S1201 and evaluation of the risk of infringement is performed. The process proceeds to S1203 in a case where the evaluation of the risk of infringement is completed for all pieces of content.

In S1203, the condition evaluation unit 1103 records, in the recording unit 1104, the model used, the content, the position information of each object in the content, the risk value of each object, and the generation condition, regarding a plurality of pieces of content for which the risk of infringement has been evaluated. Then, the display unit 1105 displays the evaluation result of the model from the recorded result.

Here, the position information of each object in the content is the position information of each object obtained in S403. The risk value is the risk value calculated for S408 in the object. The generation condition is related to the feature of the object among the generation conditions obtained in S1201. For example, the generation conditions include a prompt, a negative prompt, a CFG scale, and a seed. In the present embodiment, the trained model ID for specifying a model used, the content ID for specifying content, the region range of the object in the content, the risk value of the object, and the prompt used when creating the content are recorded in the management table 1002.

The evaluation of the model is calculated from the position information of the object of each piece of content generated by the model used, the risk value, and the generation condition. For example, by integrating and normalizing, in association with the position information, the risk value of infringement of the object generated by the model used, it is possible to calculate the trend of the distribution of the risk of infringement of the model used.

For example, each word used for a prompt that is one of the generation conditions is integrated in association with the risk value of the object included in the content generated by the word and the position information of the object. By comparing the integration results, it is possible to calculate a word (high risk word) that tends to have a high risk of infringement in the model used and the position information thereof. In the present embodiment, the distribution tendency of the risk of infringement of the model used and the prompt word with a high risk of infringement and the position information thereof are calculated. Note that the evaluation method is not limited to the above method as long as the risk of infringement of the model can be evaluated.

The presentation of the evaluation result is performed by the display unit 107. The presentation method is not particularly limited as long as the method enables the user to recognize the evaluation result. The item to be presented is not particularly limited as long as it is an item that can confirm, in association with the position information, the risk of infringement of the model used. For example, a part or all of the items recorded in the management table 1002 may be presented. A part or all of the evaluation results of the model used may be presented.

The display screen 1003 in FIG. 10 described above displays the tendency of the risk value corresponding to the position, which is a part of the evaluation results of the model used (ID = 001), and highlights the high risk region 1005. The risk value and the high risk word in the high risk region 1005 are displayed together.

As described above, according to the third embodiment, the risk value described in the first embodiment is derived for a plurality of images generated using various trained models and recorded in association with the generation condition. In particular, the risk value and the generation condition are recorded in association with the position information in the image. Then, based on the recorded information, an evaluation associated with the position in the image generated by individual models is calculated and presented to the user. This enables the user to grasp the tendency regarding the risk of infringement in individual trained models, and perform appropriate improvement of the trained model according to the tendency.

### (Modification Example 3-1)

In the above description, calculation of the risk value associated with the position information is performed by integrating, in association with the position information of the object, the risk value of the object in the content generated by the trained model. However, the method is not particularly limited as long as the risk of infringement of the trained model can be evaluated. For example, weighting may be performed based on the position information in the image of the object. Specifically, in a case where the user plans to use only part of the content, weighting may be performed so as to lower the risk of infringement of a region unlikely to be used. Alternatively, only an object with a risk value exceeding an arbitrary threshold may be integrated and calculated. The risk value of the object and the position information of the object may be associated with each pixel of the content, or may be associated with a region in which a plurality of pixels are connected.

### (Modification Example 3-2)

In the above description, as a method of evaluating the risk of infringement of the prompt word, the risk value of the object included in the content generated using each prompt word is integrated in association with the position information of the object. Then, the risk of infringement of the prompt word is evaluated from the integration result. However, the method of evaluating the risk of infringement of a prompt keyword is not limited to the above method. For example, only some prompt keywords highly related to the object among a plurality of prompt words used to generate the content may be associated and integrated. Determination of the prompt keyword highly related to the object can be performed by user selection. Alternatively, all the prompt words used to generate the object and the content are input to, for example, a neural network learned in advance, and the feature representation is extracted. It is possible to select the prompt keyword highly related to the object by comparing the extracted feature representation with cosine similarity, for example.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (301) comprising:
obtainment means (302) for obtaining content generated by generative artificial intelligence, AI;
identification means (303) for identifying an object having an infringement risk among objects included in the content; and
recording means (308) for recording, as risk information, position information of the object in the content.

2. The information processing apparatus according to claim 1, wherein
the identification means identifies, as the object having an infringement risk, an object of a specific category included in the content.

3. The information processing apparatus according to claim 1 or 2, further comprising
calculation means (304) for calculating a risk value indicating a degree of possibility that the object having an infringement risk is an infringing object, wherein
the recording means records, into the risk information, the position information and the risk value for the object having an infringement risk in association with each other.

4. The information processing apparatus according to claim 3, wherein
the calculation means calculates the risk value for the object having an infringement risk based on similarity between the object having an infringement risk and given rights-protected data.

5. The information processing apparatus according to any one of claims 1 to 4, further comprising
display control means (807) for displaying the content and the risk information on a display unit.

6. The information processing apparatus according to claim 5, wherein
the display control means further displays, on the display unit, information regarding rights-protected data similar to the object having an infringement risk.

7. The information processing apparatus according to claim 5 or 6, further comprising:
substitute obtainment means (808) for obtaining a substitute that can replace the object having an infringement risk;
reception means for receiving an instruction to replace the object having an infringement risk in the content with the substitute; and
generation means for generating substitute content in which the object having an infringement risk is replaced with the substitute based on the instruction.

8. The information processing apparatus according to any one of claims 1 to 7, further comprising
derivation means for deriving a position at which there is a relatively high probability that the object having an infringement risk is generated in content generated by the generative Al based on the risk information for a plurality of pieces of content generated by the generative AI.

9. The information processing apparatus according to claim 8 further comprising
condition obtainment minas for obtaining a generation condition used when the generative Al generates each of the plurality of pieces of content, wherein
the derivation means further derives a generation condition under which there is a high possibility of generating an object having an infringement risk in content generated by the generative AI.

10. A control method of an information processing apparatus, the control method comprising:
obtaining (S401) content generated by generative Al;
identifying (S402) an object having an infringement risk among objects included in the content; and
recording (S409), into a storage unit, position information of the object in the content as risk information.

11. A computer program comprising instructions which, when the program is executed by a computer, cause the computer to carry out the control method of claim 10.
